# EUROPÄISCHE PATENTSCHRIFT

(11) **EP 0 835 389 B1**
(45) Veröffentlichungstag und Bekanntmachung des Hinweises auf die Patenterteilung: **20.10.1999**
(21) Anmeldenummer: 95910478.7
(22) Anmeldetag: 13.02.1995
(51) Int. Cl.: F16B 25/10, F16B 19/10

(54) **PLÄTTCHENFÖRMIGER BOHRTEIL FÜR SELBSTBOHRENDE BEFESTIGER**
LAMINA-SHAPED BOREPIECE FOR SELF-BORING FASTENING ELEMENTS
ELEMENT DE PER AGE EN FORME DE LAMELLE POUR ORGANE DE FIXATION AUTOFOREUR

(30) Priorität: 09.03.1994 CH 69094
(43) Veröffentlichungstag der Anmeldung: 15.04.1998
(73) Patentinhaber: SFS Industrie Holding AG, 9435 Heerbrugg (CH)
(72) Erfinder: PALM, Erich, CH-9435 Heerbrugg (CH)
(74) Vertreter: Ludescher, Hans
(86) Internationale Anmeldenummer: EP9500514
(87) Internationale Veröffentlichungsnummer: WO9524566

(56) Entgegenhaltungen:
- DE-A- 2 801 962
- SE-B- 454 797
- US-A- 3 997 279
- US-A- 4 480 951

## Beschreibung

Die Erfindung betrifft einen plättchenförmigen Bohrteil für selbstbohrende Befestiger, z.B. Niete, Schrauben, Dübel oder dergleichen, mit zwei einen Winkel von kleiner als 180° miteinander einschließenden, frontseitigen Schneidkanten und in Einbohrrichtung gesehen der jeweiligen Schneidkante zugeordneten und zumindest annähernd parallel zu diesen verlaufenden Auskehlungen an der Oberfläche des Bohrteils.

Gerade bei einem Bohrvorgang in dünnem Material, also beispielsweise in dünnen Blechen, ist stets die Gefahr gegeben, daß die Bohrung nicht exakt kreisförmig ist, sondern annähernd dreieckförmig nach Art eines Gleichdicks. Ein solches Phänomen ergibt sich sowohl bei zylindrischen Bohrteilen als auch bei plättchenförmigen Bohrteilen.

Eine selbstbohrende Schraube mit einem plättchenförmigen Bohrteil ist aus der DE-C-28 01 962 bekannt. Auch ist bereits eine Ausführung bekannt geworden (US-PS 4 480 951), bei welcher ein plättchenförmiger Bohrteil nach Art eines Stufenbohrers ausgebildet ist. An einen vorderen Bohrteil mit kleinem Durchmesser schließt sich ein axial versetzt dazu angeordneter Bohrteil an, welcher dann die zuerst hergestellte Bohrung vergrößern kann. Gerade bei solchen plättchenförmigen Bohrteilen ergibt sich aber bei relativ kleinen Durchmessern das Problem, daß infolge der Dicke des Bohrteils an der hergestellten Bohrungswand große Reibungskräfte auftreten.

Die vorliegende Erfindung hat sich zur Aufgabe gestellt, einen plättchenförmigen Bohrteil derart auszubilden, daß mit einem relativ kleinen Durchmesser vorgebohrt werden kann, wobei die Herstellung einer exakt kreisförmigen Bohrung gewährleistet sein soll.

Erfindungsgemäß gelingt dies dadurch, daß im Bereich beider frontseitigen Schneidkanten jeweils ein Einschnitt mit zurückversetzter Schneidkante vorgesehen ist, wobei jeweils eine erste Begrenzung dieser Einschnitte parallel zur Mittelachse des Bohrteils ausgerichtet ist und eine zweite, die zurückversetzte Schneidkante bildende Begrenzung stumpfwinklig zur ersten Begrenzung verläuft, und daß die Einschnitte im Bereich der axialen Erstreckung der Auskehlungen ausgebildet sind. Durch diese besondere erfindungsgemäße Ausgestaltung wird erreicht, daß der an die beiden frontseitigen Schneidkanten anschließende Bereich des Bohrteils mit Ausnahme des unmittelbaren Schneidkantenbereiches dünner als die Dicke des plättchenförmigen Bohrteils ausgeführt ist, da dieser Bereich ja unmittelbar in den Auskehlungen liegt, welche einander von beiden Seiten her auf den gegenüberliegenden Begrenzungsflächen kreuzen.

Von besonderem Vorteil ist bei der erfindungsgemäßen Ausgestaltung auch, daß die zurückversetzten Schneidkanten ebenfalls im Bereich der Auskehlungen ausgebildet sind, so daß ein entsprechender Schneidwinkel gewährleistet werden kann und außerdem die Möglichkeit besteht, durch Variieren des Winkels dieser zurückversetzten Schneidkanten den Schneidwinkel je nach Bohrradius zu verändern.

Eine solche Möglichkeit ist z.B. dann gegeben, wenn der von den zurückversetzten Schneidkanten miteinander eingeschlossene Winkel größer ist als der von den frontseitigen Schneidkanten eingeschlossene Winkel. Die zurückversetzten Schneidkanten verlaufen dann nicht parallel zu den frontseitigen Schneidkanten und somit zu den Auskehlungen, so daß die Schneidkanten über ihre ganze Länge einen unterschiedlichen Schneidwinkel aufweisen, um dann beispielsweise am äußersten Ende wiederum in jenen Schneidwinkel überzugehen, der von den frontseitigen Schneidkanten vorgegeben ist.

Es hat sich als vorteilhaft erwiesen, wenn der von den zurückversetzten Schneidkanten miteinander eingeschlossene Winkel im Bereich zwischen 160° und 180° liegt. Dadurch kann der gegenüber dem mittigen Vorbohrteil zurückversetzte Bohrteil fast nach Art eines Fräsers wirken, wobei auch beim Durchbohren von dünnen Werkstücken gewährleistet ist, daß der größere Bohrbereich bereits vollständig im Einsatz ist, bevor der von den frontseitigen Schneidkanten gebildete Vorbohrteil das Werkstück durchdrungen hat. Zudem ist gewährleistet, daß eine ordnungsgemäße Führung des Vorbohrteiles bis zum gänzlichen Einsatz des größeren Bohrabschnittes vorhanden ist.

Zur Herstellung eines exakt kreisförmigen Bohrloches hat sich als ausreichend herausgestellt, wenn nur ein relativ kurzer Bereich als Vorbohrteil fungiert. Es wird daher vorgeschlagen, daß die größte axiale Erstreckung der Einschnitte annähernd bis zur halben Breite der Auskehlungen führt.

Ferner ist es vorteilhaft, wenn die größte axiale Erstreckung der Einschnitte bis zur tiefsten Eindringung der Auskehlung in den Bohrteil führt. Dadurch ist gewährleistet, daß an keiner Stelle der zurückversetzten Schneidkanten ein von der Auskehlung her gesehen negativer Schneidwinkel vorhanden ist. Natürlich ist die vordere Abschlußfläche anschließend an die zurückversetzten Schneidkanten spitzwinklig zur Ebene des plättchenförmigen Bohrteils ausgerichtet, doch ist es trotzdem vorteilhaft, wenn auch der Bereich der Auskehlungen, welcher an die zurückversetzten Schneidkanten anschließt, zumindest in der Ebene des plättchenförmigen Bohrteils liegt oder eben zusätzlich einen entsprechenden Schneidwinkel bildet. Damit werden die Späneabfuhr und natürlich die Schnittgeschwindigkeit wesentlich verbessert.

Gerade bei einer solchen Ausgestaltung ist es auch von besonderem Vorteil, daß sich der Schneidwinkel über die Länge der zurückversetzten Schneidkanten ständig verändert. Von einem relativ großen Winkel an dem der Mittelachse zugewandten Endbereich der zurückversetzten Schneidkanten geht es langsam über zu einem relativ kleinen Winkel gegen das freie äußere Ende der zurückversetzten Schneidkanten. Je größer also der Durchmesserbereich ist, umso kleiner wird der Schneidwinkel, so daß die Abarbeitbarkeit des Materials gerade im Bereich, wo im größeren Durchmesser mehr abgearbeitet werden muß verbessert wird.

Es ist in diesem Zusammenhang vorteilhaft, wenn gerade der äußerste Bereich wiederum jenen Schneidwinkel erhält, der auch im Bereich der frontseitigen Schneidkanten vorhanden ist. Dies gelingt dann, wenn das frei radial auskragende Ende der zurückversetzten Schneidkanten in einer Linie mit den frontseitigen Schneidkanten liegt. Nachdem ja die Auskehlungen parallel zu den frontseitigen Schneidkanten verlaufen, ergibt sich dadurch im Bereich des frei radial auskragenden Endes der zurückversetzten Schneidkanten der gleiche Schneidwinkel.

Durch besondere Maßnahmen ist es möglich geworden, mit einem plättchenförmigen Bohrteil auch in dünnen Werkstücken, also auch bei der Verbindung von zwei dünnen Blechen, exakt kreisförmige Bohrungen herzustellen, was sich auch für die nachfolgende Befestigung positiv auswirkt. Es können Niete, Schrauben, Dübel oder dergleichen wesentlich wirkungsvoller eingesetzt werden bzw. sie können überhaupt erst dann sinnvoll in die Bohrung eingeschoben werden, wenn diese Bohrung exakt kreisförmig hergestellt worden ist.

Eine solche Ausbildung eines plättchenförmigen Bohrteils eignet sich aber nicht nur zum Durchbohren von dünnen Werkstücken, sondern kann in gleicher Weise auch für entsprechend dickere Werkstücke eingesetzt werden, da die Bohrleistung mit dieser abgestuften Ausgestaltung auch dort noch wesentlich erhöht werden kann.

Weitere erfindungsgemäße Merkmale und besondere Vorteile werden in der nachstehenden Beschreibung anhand der Zeichnungen noch näher erläutert. Es zeigen:
Fig. 1 einen plättchenförmigen Bohrteil bei einem Einsatz in einem selbstbohrenden Blindniet;
Fig. 2 den Anbohrbeginn eines Bohrteils in einem dünnen Werkstück;
Fig. 3 einen Schnitt durch das Werkstück mit dem fertig gesetzten Blindniet;
Fig. 4 einen Bohrteil in Vorderansicht;
Fig. 5 einen Schnitt nach der Linie V-V in Fig. 4;
Fig. 6 eine Schrägsicht eines plättchenförmigen Bohrteils.

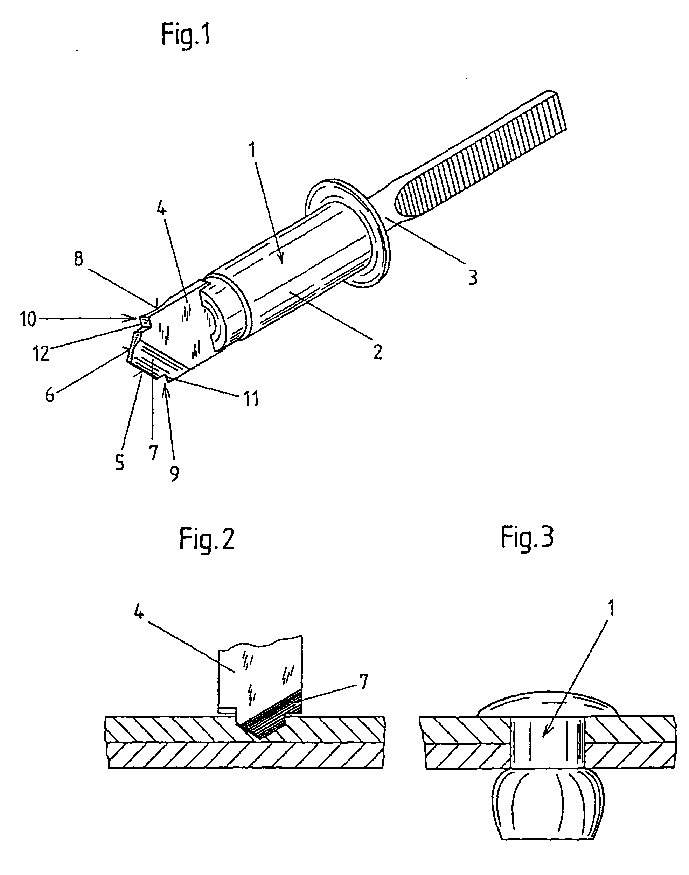

In Fig. 1 ist ein selbstbohrender Befestiger in Form eines Blindniets 1 gezeigt, welcher aus einer Niethülse 2, einem Zugdorn 3 sowie einem plättchenförmigen Bohrteil 4 gebildet ist. Der plättchenförmige Bohrteil weist zwei Schneidkanten 5 und 6 auf, welche in Einbohrrichtung gesehen den frontseitigen Abschluß des Bohrteils 4 bilden. Zumindest annähernd parallel zu diesen Schneidkanten 5, 6 sind beidseitig an der Oberfläche des Bohrteils 4 Auskehlungen 7, 8 vorgesehen. Im Bereich der beiden frontseitigen Schneidkanten 5 und 6 sind jeweils Einschnitte 9, 10 vorgesehen, welche zurückversetzte Schneidkanten 11, 12 bilden. Eine erste Begrenzung 13, 14 dieser Einschnitte 9, 10 ist zumindest annähernd parallel zur Mittelachse 15 des Bohrteils 4 ausgerichtet. Die zweite, die zurückversetzte Schneidkante 11, 12 bildende Begrenzung verläuft stumpfwinklig zur ersten Begrenzung 13, 14. Ein wesentliches Merkmal ist dabei, daß die Einschnitte 9, 10 im Bereich der axialen Erstreckung der Auskehlungen 7 ausgebildet sind. Der von den zurückversetzten Schneidkanten 11, 12 miteinander eingeschlossene Winkel liegt zweckmäßig im Bereich zwischen 160° und 180° und ist somit wesentlich größer als der von den beiden frontseitigen Schneidkanten 5 und 6 eingeschlossene Winkel. Vorteilhaft ist der Winkel, den die beiden zurückversetzten Schneidkanten 11, 12 miteinander einschließen, geringfügig kleiner als 180°, so daß die Gefahr ausgeschlossen ist, am Schluß des Bohrvorganges eine ringförmige Scheibe aus dem zu durchbohrenden Material herauszutrennen. Es ist dadurch auch weniger die Gefahr gegeben, daß sich der Bohrteil am Schluß des Bohrvorganges einfrißt bzw. einrastet, so daß eine Störung des Bohrvorganges ausgeschlossen ist.

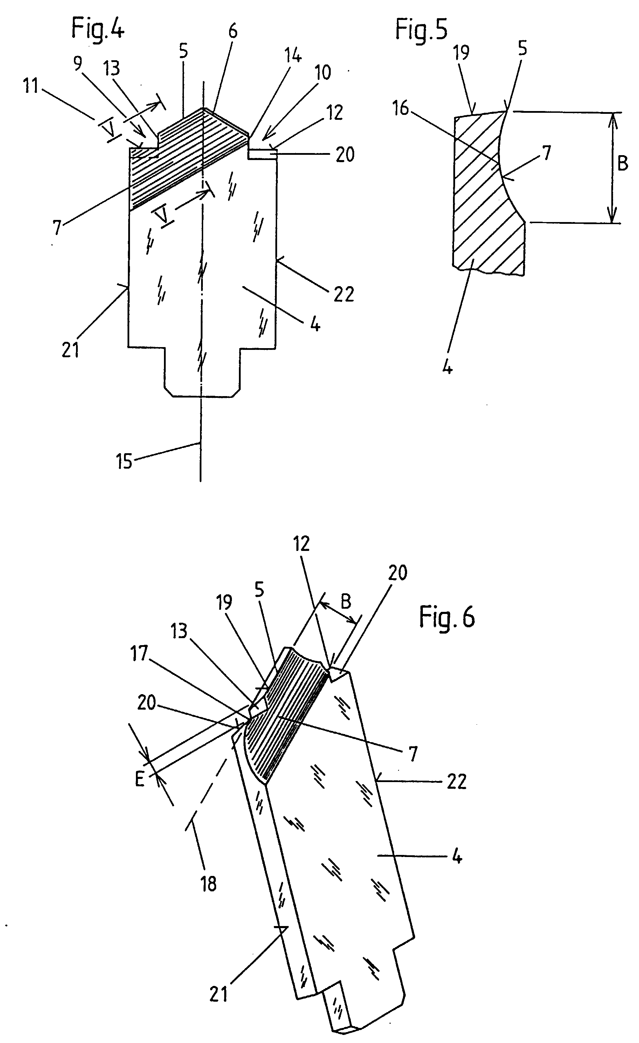

Aus allen Darstellungen der Zeichnung ist ersichtlich, daß die größte axiale Erstreckung E der Einschnitte 9, 10 maximal bis zur halben Breite B der Auskehlungen 7, 8 führt. Dabei ist gerade darauf geachtet, daß die größte axiale Erstreckung E der Einschnitte 9, 10 bis zur tiefsten Eindringung der Auskehlung 7, 8 in den Bohrteil 4 führt. Dies ist also am Übergang 16 bei den im Querschnitt bogenförmig verlaufenden Auskehlungen 7, 8 der Fall. Dann ist, wie aus Fig. 6 aufgrund der eingetragenen Schraffierungslinien deutlich ersichtlich ist, der Vorteil gegeben, daß über die ganze Länge der zurückversetzten Schneidkanten 11, 12 unterschiedliche Schneidwinkel vorhanden sind. Der Schneidwinkel wird also, je weiter die Schneidkanten 11, 12 nach außen führen, kleiner. Dies ergibt sich einfach aufgrund der vorgegebenen Auskehlungen 7, 8 und aufgrund der erfindungsgemäß vorgeschlagenen Anordnung der Einschnitte und somit der zurückversetzten Schneidkanten 11, 12.

Bei einer besonderen Ausgestaltung liegt das frei radial auskragende Ende 17 der zurückversetzten Schneidkanten 11, 12 in einer Linie 18 mit den frontseitigen Schneidkanten 5 bzw. 6.

An die frontseitigen Schneidkanten 5 und 6 schließen ebenso wie an die zurückversetzten Schneidkanten 11, 12 spitzwinklig zur Ebene des Bohrteils 4 abfallende Flächen 19 bzw. 20 an, die ebenfalls einen Einfluß auf den Schneidwinkel haben. In diesem Zusammenhang ist es gerade dann, wenn tiefere Bohrungen hergestellt werden sollen, zusätzlich vorteilhaft, wenn auch die seitlichen Begrenzungsflächen 21 und 22 des plättchenförmigen Bohrteils der Eindrehrichtung abgewandt spitzwinklig geneigt sind, um dadurch Verreibungen an der Bohrungswand zu verhindern.

Der plättchenförmige Bohrteil kann als getrenntes Werkstück hergestellt und mit dem Befestiger form- und/oder kraftschlüssig verbunden werden. Es ist dann möglich, den Bohrteil und den Befestiger selbst oder eben Teile des Befestigers aus einem anderen Material bzw. einem anderen Materialgefüge zu fertigen. Dann ist es auch in sinnvoller Art und Weise möglich, die plättchenförmigen Bohrteile in einem Stanzverfahren herzustellen. Denkbar wäre es aber grundsätzlich auch, einstückig am Befestiger ausgebildete Bohrteile, die eben von ihrer Form her plättchenförmig ausgebildet sind, auf die erfindungsgemäße Art und Weise auszubilden, so daß auch bei solchen Befestigern die gleichen Vorteile erzielt werden können. Eine solche Variante ist dann denkbar, wenn der Befestiger aus einem härtbaren Material besteht bzw. zumindest einen Teilabschnitt aus härtbarem Material aufweist.

In der Beschreibung ist zwar stets davon ausgegangen worden, daß der plättchenförmige Bohrteil gemäß der vorliegenden Erfindung für selbstbohrende Befestiger einzusetzen ist. Es wäre aber durchaus möglich, einen solchen plättchenförmigen Bohrteil auch als Einsatzteil bzw. als Endteil eines Bohrers an sich einzusetzen, ohne daß dieser Bohrer dann auch zugleich ein Befestigungselement wäre.

## Patentansprüche

1. Plättchenförmiger Bohrteil für selbstbohrende Befestiger, z.B. Niete, Schrauben, Dübel oder dergleichen, mit zwei einen Winkel von kleiner als 180° miteinander einschließenden, frontseitigen Schneidkanten und in Einbohrrichtung gesehen der jeweiligen Schneidkante zugeordneten und zumindest annähernd parallel zu diesen verlaufenden Auskehlungen, an der Oberfläche des Bohrteils **dadurch gekennzeichnet,** daß im Bereich beider frontseitigen Schneidkanten (5, 6) jeweils ein Einschnitt (9, 10) mit zurückversetzter Schneidkante (11, 12) vorgesehen ist, wobei jeweils eine erste Begrenzung (13, 14) dieser Einschnitte (9, 10) parallel zur Mittelachse (15) des Bohrteils (4) ausgerichtet ist und eine zweite, die zurückversetzte Schneidkante (11, 12) bildende Begrenzung stumpfwinklig zur ersten Begrenzung (13, 14) verläuft, und daß die Einschnitte (9, 10) im Bereich der axialen Erstreckung der Auskehlungen (7, 8) ausgebildet sind.

2. Bohrteil nach Anspruch 1, dadurch gekennzeichnet, daß der von den zurückversetzten Schneidkanten (11, 12) miteinander eingeschlossene Winkel größer ist als der von den frontseitigen Schneidkanten (5, 6) eingeschlossene Winkel.

3. Bohrteil nach Anspruch 1 oder 2, dadurch gekennzeichnet, daß der von den zurückversetzten Schneidkanten (11, 12) miteinander eingeschlossene Winkel im Bereich zwischen 160° und 180° liegt.

4. Bohrteil nach Anspruch 1, dadurch gekennzeichnet, daß die größte axiale Erstreckung (E) der Einschnitte (9, 10) annähernd bis zur halben Breite (B) der Auskehlungen (7, 8) führt.

5. Bohrteil nach Anspruch 1, dadurch gekennzeichnet, daß die größte axiale Erstreckung (E) der Einschnitte (9, 10) bis zur tiefsten Eindringung der Auskehlung (7, 8) in den Bohrteil (4) führt.

6. Bohrteil nach Anspruch 1, dadurch gekennzeichnet, daß das frei radial auskragende Ende (17) der zurückversetzten Schneidkanten (11, 12) in einer Linie (18) mit den frontseitigen Schneidkanten (5, 6) liegt.

## Claims

1. A lamellar boring member for self-boring fasteners, for example rivets, screws, dowels or the like, having two cutting edges at the front end forming an angle of less than 180° with one another and, viewed in the boring direction, having grooves on the surface of the boring member, which are associated with the respective cutting edge and which extend at least approximately parallel thereto, characterised in that in the vicinity of the two cutting edges (5,6) at the front end there is provided a respective indentation (9,10) with a set-back cutting edge (11,12), wherein a respective first boundary (13,14) of these indentations (9,10) is aligned parallel to the centre axis (15) of the boring member (4) and a second boundary forming the set-back cutting edge (11,12) extends at an obtuse angle to the first boundary (13,14), and in that the indentations (9,10) are formed in the vicinity of the axial extension of the grooves (7,8).

2. A boring member according to Claim 1, characterised in that the angle formed by the set-back cutting edges (11,12) with one another is greater than the angle formed by the cutting edges (5,6) at the front end.

3. A boring member according to Claim 1 or 2, characterised in that the angle formed by the set-back cutting edges (11,12) with one another is within the range of between 160° and 180°.

4. A boring member according to Claim 1, characterised in that the maximum axial extension (E) of the indentations (9,10) extends approximately up to half the width (B) of the grooves (7,8).

5. A boring member according to Claim 1, characterised in that the maximum axial extension (E) of the indentations (9,10) extends up to the deepest penetration of the groove (7,8) in the boring member (4).

6. A boring member according to Claim 1, characterised in that the freely radially projecting end (17) of the set-back cutting edges (11,12) lies on a line (18) with the cutting edges (5,6) at the front end.

## Revendications

1. Foret en forme de plaquette pour fixations autoperforantes, par exemple rivets, vis, chevilles ou objets analogues, comportant deux arêtes frontales de coupe faisant un angle inférieur à 180° ainsi que des cannelures associées respectivement aux arêtes de coupe et incluses frontalement vues en direction du forage et s'étendant au moins à peu près parallèlement à elles
caractérisé en ce que
dans la zone de chacune des arêtes frontales de coupe (5, 6) il est prévu une encoche (9, 10) présentant une arête (11, 12) de coupe décalée vers l'arrière, cette arête étant délimitée par un premier bord (13, 14) parallèle à l'axe central (15) du foret (4) et par un second bord qui forme l'arête de coupe reculée (11, 12) et qui fait un angle obtus avec le premier bord (13, 14), les encoches (9, 10) se trouvant dans la zone de l'étendue axiale des cannelures (7, 8).

2. Foret selon la revendication 1,
caractérisé en ce que
l'angle que font entre elles les arêtes de coupe reculées (11, 12) est supérieur à celui que font entre elles les arêtes frontales de coupe (5, 6).

3. Foret selon la revendication 1 ou 2,
caractérisé en ce que
l'angle que font entre elles les arêtes de coupe reculées (11, 12) est compris entre 160 et 180°.

4. Foret selon la revendication 1,
caractérisé en ce que
la plus grande dimension axiale (E) des encoches (9, 10) peut atteindre à peu près la moitié de la largeur (B) des cannelures (7, 8).

5. Foret selon la revendication 1,
caractérisé en ce que
la plus grande dimension axiale (E) des encoches (9, 10) va jusqu'au point de la cannelure (7, 8) creusé le plus profondément dans le foret (4).

6. Foret selon la revendication 1,
caractérisé en ce que
l'extrémité (17), faisant saillie radialement, de chaque arête de coupe reculée (11, 12) est sur la ligne (18) que suit l'arête de coupe frontale correspondante (5, 6).
